# EUROPÄISCHE PATENTSCHRIFT

(11) **EP 2 324 203 B1**
(45) Veröffentlichungstag und Bekanntmachung des Hinweises auf die Patenterteilung: **25.02.2015**
(21) Anmeldenummer: 09737334.4
(22) Anmeldetag: 09.09.2009
(51) Int. Cl.: F01D 5/00, B23P 6/00

(54) **Ersatzteil fuer eine Gasturbinen-Schaufel sowie ein Verfahren zur Reparatur einer Gasturbinen-Schaufel**
Replacement part for a gas turbine blade and a method for repairing a gas turbine blade
Pièce de remplacement pour aube d'une turbine à gaz et procédé de réparation d'une aube de turbine à gaz

(30) Priorität: 13.09.2008 DE 102008047043
(43) Veröffentlichungstag der Anmeldung: 25.05.2011
(73) Patentinhaber: MTU Aero Engines AG, 80995 München (DE)
(72) Erfinder: EBERLEIN, Armin, 86836 Klosterlechfeld (DE); SCHNEIDER, Albert-Valentin, 80687 München (DE)
(86) Internationale Anmeldenummer: PCT/DE2009/001280
(87) Internationale Veröffentlichungsnummer: WO 2010/028641

(56) Entgegenhaltungen:
- EP-A- 1 607 169
- DE-A1- 19 963 714
- JP-A- 61 095 769
- US-A1- 2003 082 048
- US-A1- 2003 082 053
- US-A1- 2005 091 848

## Beschreibung

Die Erfindung betrifft ein Ersatzteil für eine Gasturbinen-Schaufel sowie ein Verfahren zur Reparatur einer Gasturbinen-Schaufel.

Im Bereich der Gasturbinen, insbesondere im Bereich der Flugtriebwerke, sind bekanntermaßen die Schaufeln der Rotoren von Verdichter oder Turbine nach einer gewissen Nutzung oder der Einwirkung von Fremdkörpern beschädigt.

Um - im Falle von Integralrotoren, wie BLISK (eingedeutscht von "bladed disk") oder BLING (eingedeutscht von "bladed ring") - nicht den gesamten Rotor auswechseln zu müssen bzw. im Falle von Rotoren mit einzelnen separaten Schaufeln nicht die kompletten Schaufeln auswechseln zu müssen, hat sich das sog. Patchen durchgesetzt. Bei diesem Patchen wir ein Abschnitt einer Schaufel zunächst abgetrennt und dann durch einen Ersatzteilabschnitt ersetzt. Dies erfolgt i.d.R. so, dass nach dem Abtrennen des Schaufelabschnitts ein Ersatzteilabschnitt angeschweißt wird. Der Ersatzteilabschnitt kann dabei bereits das exakte Maß des zu ersetzenden Abschnitts aufweisen; üblich ist allerdings, dass der Ersatzteilabschnitt ein gewisses Übermaß hat, das im Rahmen einer Nachbearbeitung zur Erzielung der angestrebten Geometrie entfernt wird. Je nach Schaufelwerkstoff- und/oder -geometrie können sich aufgrund der ungünstigen Bedingungen am Übergang zwischen Patch und Schaufel Schweißfehler in Form von Rissen einstellen.

Die US 2005/0091848 A1 beschreibt eine Turbinenschaufel und ein Verfahren zur Herstellung von Turbinenschaufeln. Darüber hinaus wird ein Reparaturverfahren für Turbinenschaufeln vorgestellt. Die Reparatur bezieht sich auf den Ersatz einer Schaufelspitze, wobei die Schaufelspitze der zu reparierenden Schaufel zunächst entfernt wird und durch eine Ersatzschaufelspitze ersetzt wird.

Vor diesem Hintergrund liegt der Erfindung die Aufgabe zugrunde, eine Möglichkeit zu etablieren, reparierte Gasturbinenschaufeln mit nahezu fehlerfreier Schweißverbindung zu schaffen.

Erfindungsgemäß wird ein Ersatzteil gemäß Anspruch 1 vorgeschlagen. Eine erfindungsgemäße Gasturbinen-Schaufel ist Gegenstand des Anspruchs 7. Ein erfindungsgemäßes Verfahren zur Reparatur einer Gasturbine-Schaufel ist Gegenstand des Anspruchs 10. Bevorzugte Weiterbildungen sind Gegenstand der Unteransprüche.

Es wird also insbesondere ein Ersatzteil für eine Gasturbinen-Schaufel vorgeschlagen. Die Gasturbine, für die diese Gasturbinen-Schaufel ist bzw. zu der diese Gasturbinen-Schaufel gehört, kann beispielsweise als Flugtriebwerk gestaltet sein. Das Ersatzteil ist insbesondere dafür bestimmt, einen zu ersetzenden, entfernten Bereich der Gasturbinen-Schaufel zu ersetzen. Der zu ersetzende Bereich weist dabei einen Abschnitt der Schaufelspitze auf, sowie einen Abschnitt von zumindest einer Kante. Diese Kante ist eine Kante, die zu einer Gruppe von Kanten gehört, wobei diese Gruppe von Kanten die Eintrittskante und die Austrittskante der Gasturbinen-Schaufel umfasst. Das Ersatzteil weist ferner zumindest eine Seite auf, die als Fügeseite bezeichnet werden kann bzw. bezeichnet wird. Diese Fügeseite des Ersatzteils ist die Seite des Ersatzteils, mit welchem das Ersatzteil mit der um den entfernten Bereich verminderten Gasturbinen-Schaufel bzw. der Restschaufel bzw. der Schaufelstumpf in Kontakt zu bringen und an dieser Gasturbinen-Schaufel zu fügen ist. Beispielsweise kann das Ersatzteil nach Art eines Dreiecks ausgebildet sein, wobei eine Seite für die Ausbildung einer Kante bzw. eines Kantenabschnitts, insbesondere Eintrittskante bzw. Austrittskante oder Abschnitt davon, vorgesehen ist, und wobei eine davon verschiedene Seite für die Ausbildung der Schaufelspitze bzw. eines Abschnitts der Schaufelspitze vorgesehen ist, und wobei eine dritte Seite, die von den beiden vorgenannten verschieden ist, die Fügeseite ausbildet. Es kann dabei vorgesehen sein, dass im Bereich der zu bildenden Eintritts- bzw. Austrittskante bzw. und im Bereich der zu bildenden Schaufelspitze und gegebenenfalls in weiteren Bereichen ein Übermaß gegeben ist.

Gemäß der Erfindung ist vorgesehen, dass die Fügeseite zumindest einen ersten Abschnitt aufweist, in welchem diese Fügeseite im Querschnitt U-förmig ist.

Dabei kann vorgesehen sein, dass die Fügeseite durchgehend entlang dieser Seite im Querschnitt U-förmig ist. Es kann aber auch vorgesehen sein, dass die Fügeseite entlang ihrer Seite nur abschnittsweise bzw. teilweise U-förmig ist. Die U-Form ist insbesondere so, dass sie einen Grund bzw. Boden ausbildet, sowie zwei beidseits dieses Grundes bzw. Bodens verlaufende Flansche bzw. Wände. Es kann vorgesehen sein, dass der Grund bzw. der Boden dabei eben ausgebildet ist bzw. im Wesentlichen eben ausgebildet ist. Ferner kann vorgesehen sein, dass die Wände bzw. Flansche der U-Form gleich breit sind, und zwar in Richtung der Längserstreckungsrichtung der Fügeseite gesehen. Es kann aber auch vorgesehen sein, dass die Wände die die U-Form ausbilden, in Richtung der Längserstreckungsrichtung der Fügeseite unterschiedlich breit sind. Letzteres kann beispielsweise bei einer bevorzugten Gestaltung gegeben sein, bei der sich an den ersten Abschnitt, der im Querschnitt eine U-Form bildet, wobei sich ein zweiter Abschnitt der Fügeseite anschließt, der im Querschnitt L-förmig ist. Bei einer solchen Gestaltung ist in dem Bereich der L-Form der eine Flansch der U-Form nicht mehr gegeben, während der andere Flansch zur Bildung der L-Form durchläuft.

Bei einer Gestaltung, bei welcher die Querschnitte der Fügeseite sich entlang der Fügeseite ändern, kann vorgesehen sein, dass abschnittsweise eine U-Form vorgesehen ist und abschnittsweise eine L-Form vorgesehen ist. Dabei kann vorgesehen sein, dass die U-Form und die L-Form unmittelbar aneinander angrenzen.

In einer besonders zu bevorzugenden Ausgestaltungsform ist vorgesehen, dass die Wände bzw. Flansche, die beidseits des Bodens der U-Form verlaufen, so sind, dass zumindest eine dieser Wände bzw. einer dieser Flansche eine Verdickung seiner Wandstärke aufweist. Dies kann so sein, dass die Verdickung der Wandstärke gegenüber dem anderen Flansch gegeben ist.

Es kann auch vorgesehen sein, dass die Verdickung bezogen auf die Wandstärke der gleichen Wand gegeben ist. Eine solche Gestaltung mit Verdickung kann vorgesehen sein, wenn die Fügeseite durchgehend im Querschnitt U-förmig ist. Eine solche Gestaltung mit Verdickung kann auch vorgesehen sein bei einer Gestaltung, bei der die Fügeseite im Querschnitt abschnittsweise U-förmig und abschnittsweise L-förmig ist. Dabei kann beispielsweise vorgesehen sein, dass die Verdickung im Bereich des Flansches der L-Form gegeben ist.

In vorteilhafter Ausgestaltung ist zumindest ein Flansch, der für die Bildung der U-Form vorgesehen ist und ohne Verlängerung eines solchen Flansches der U-Form vorgesehen ist, so ausgebildet, dass er in Längsrichtung der Fügeseite gesehen zumindest einen Bereich aufweist, in dem der Flansch sich in der quer zum Boden der U-Form und quer zur Längsrichtung der Fügeseite gesehenen Richtung länger erstreckt als in einem anderen in Richtung dieser Längsseite gelegenen Bereich. Diese Längenunterschiede bestehen insbesondere in der Richtung, die senkrecht zum Boden und senkrecht zu der angesprochenen Längserstreckungsrichtung der Fügeseite gelegen ist. Es kann beispielsweise vorgesehen sein, dass an einem dem Boden abgewandten Flanschende in dessen Verlauf in Längsrichtung der Fügeseite ein Knick vorgesehen ist.

In vorteilhafter Ausgestaltung verläuft die Fügeseite entlang ihrer Längserstreckungsrichtung im Wesentlichen gerade. Es kann auch vorgesehen sein, dass die Fügeseite abschnittsweise im Querschnitt U-förmig und abschnittsweise im Querschnitt L-förmig ist und zwischen dieser L-Form und U-Form - in Richtung der Fügeseite gesehen - ein Bereich vorgesehen ist der weder U-förmig noch L-förmig ausgebildet ist.

Ferner wird eine Gasturbinen-Schaufel, insbesondere Schaufel für ein Flugtriebwerk, vorgeschlagen. Die Gasturbinen-Schaufel weist einen Schaufelstumpf bzw. eine Restschaufel und eine an diesen Schaufelstumpf bzw. an dieser Restschaufel über eine Schweißverbindung angeformtes Ersatzteil auf. Das Ersatzteil kann beispielsweise in erfindungsgemäßer Weise ausgebildet sein.

Es kann vorgesehen sein, dass der zweite im Querschnitt L-förmige Abschnitt an eine Kante aus einer Gruppe von Kanten angrenzt, welche Gruppe von Kanten die Eintrittskante und die Austrittskante der Gasturbinen-Schaufel umfasst.

Es kann aber auch vorgesehen sein, dass der die Verdickung der Wandstärke ausbildende Bereich des Flansches an eine Kante aus einer Gruppe von Kanten angrenzt, welche Gruppe von Kanten die Eintrittskante um die Austrittskante der Gasturbinen-Schaufel umfasst.

Ferner kann vorgesehen sein, dass ein Bereich, in dem die dem Boden abgewandte Seite eines Flansches der L-Form bzw. U-Form weiter von diesem Boden entfernt ist als in einem anderen in Längsrichtung der Fügeseite beabstandeten Bereich, an eine Kante aus der Gruppe von Kanten angrenzt, welche Gruppe von Kanten die Eintrittskante und die Austrittskante der Gasturbinen-Schaufel aufweist.

Im Folgenden sollen im Ausführungsbeispiel die Erfindung näher erläutert werden, ohne dass die Erfindung dadurch beschränkt werden soll. Dabei zeigt:
- Fig. 1: ein erstes beispielhaftes erfindungsgemäßes Ersatzteil in verschiedenen Ansichten, das auch Bestandteil einer beispielhaften erfindungsgemäßen Schaufel sein kann und / oder für ein beispielhaftes erfindungsgemäßes Verfahren verwendet werden kann;
- Fig. 2: ein zweites beispielhaftes erfindungsgemäßes Ersatzteil in verschiedenen Ansichten, das auch Bestandteil einer beispielhaften erfindungsgemäßen Schaufel sein kann und / oder für ein beispielhaftes erfindungsgemäßes Verfahren verwendet werden kann;
- Fig. 3: ein drittes beispielhaftes erfmdungsgemäßes Ersatzteil in verschiedenen Ansichten, das auch Bestandteil einer beispielhaften erfindungsgemäßen Schaufel sein kann und / oder für ein beispielhaftes erfindungsgemäßes Verfahren verwendet werden kann;
- Fig. 4: ein viertes beispielhaftes erfindungsgemäßes Ersatzteil in verschiedenen Ansichten, das auch Bestandteil einer beispielhaften erfindungsgemäßen Schaufel sein kann und / oder für ein beispielhaftes erfindungsgemäßes Verfahren verwendet werden kann;

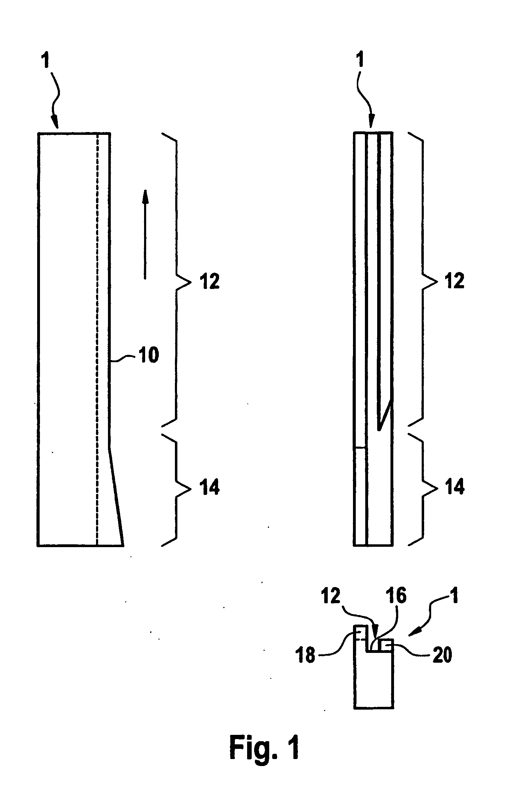

Die Figuren 1 bis 4 zeigen vier Ausführungsbeispiele eines erfindungsgemäßen Ersatzteils 1. Gleiche Teile oder Abschnitte sind in den Figuren mit gleichen Bezugszeichen versehen.

Das Ersatzteil 1 ist für eine Gasturbinenschaufel, insbesondere für eine Schaufel eines Flugtriebwerks bestimmt. Die Gasturbinenschaufel kann beispielsweise eine Verdichterschaufel oder eine Turbinenschaufel sein. Das Ersatzteil 1 ist dafür bestimmt, einen zu ersetzenden, entfernten Bereich der Schaufel zu ersetzen, wobei dieser zu ersetzende Bereich einen Abschnitt der Schaufelspitze aufweist, sowie einen Abschnitt von zumindest einer Kante. Eine Kante kann in diesem Sinne insbesondere eine Eintrittskante oder eine Austrittskante der Schaufel sein. Das Ersatzteil weist zumindest eine Seite 10 auf, die eine Fügeseite ist. Diese Fügeseite 10 ist dazu bestimmt, um mit dem um den entfernten Bereich verminderte Schaufel in Kontakt gebracht zu werden und um an dieser Schaufel mit der Fügeseite 10 gefügt zu werden. Die Fügeseite 10 weist zumindest einen ersten Abschnitt 12 auf, in welchem diese Fügeseite 10 im Querschnitt U-förmig ist.

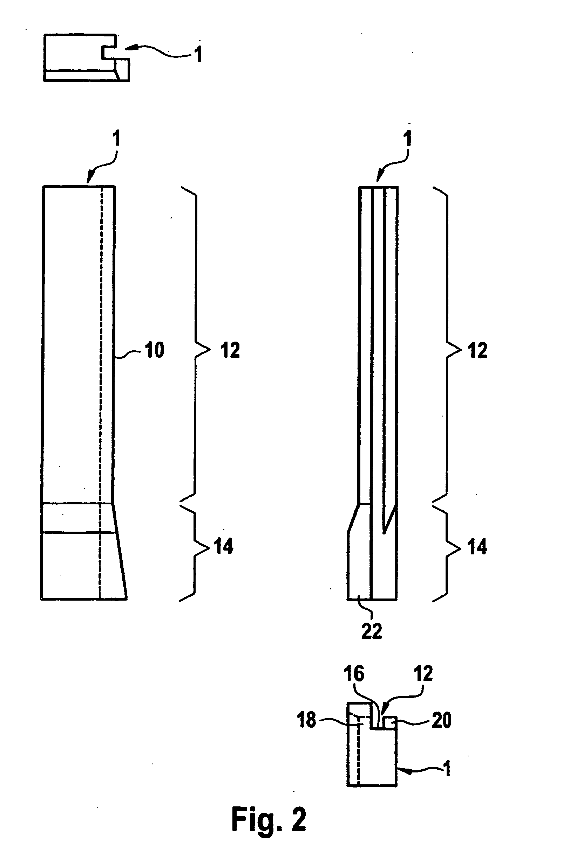

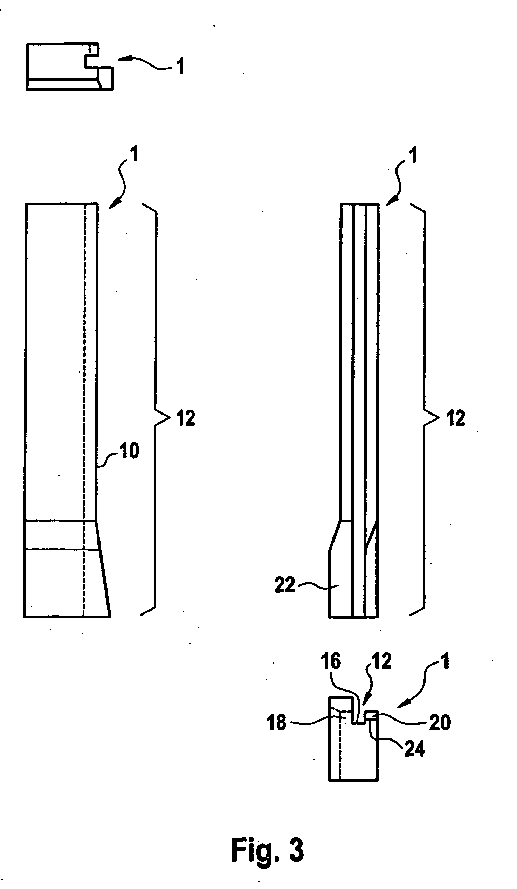

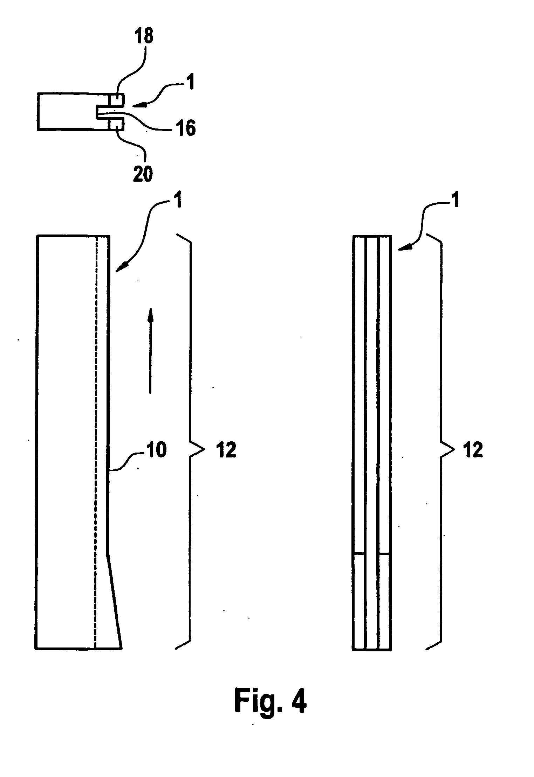

Wie der Vergleich der Figuren 1 bis 4 zeigt, ist bei den Gestaltungen gemäß den Figuren 3 und 4 die Fügeseite 10 entlang ihrer gesamten Länge U-förmig. Bei der Gestaltung gemäß den Figuren 1 und 2 ist nur ein Abschnitt der Fügeseite 10 des Ersatzteils 1 im Querschnitt U-formig.

Bei der Gestaltung gemäß den Figuren 1 und 2 ist jeweils vorgesehen, dass die Fügeseite 10 einen ersten Abschnitt 12 aufweist, in dem die Fügeseite 10 im Querschnitt U-förmig ist, sowie einen definierten stufenlosen Übergang zum zweiten Abschnitt 14 aufweist, in welchem diese Fügeseite 10 im Querschnitt im wesentlichen L-förmig ist.

In den Figuren ist bzgl. des U-förmigen Querschnitts der Fügeseite der erste Flansch dieser U-Form mit 18 bezeichnet, der zweite Flansch dieser U-Form mit 20 und der Boden dieser U-Form mit 16.

Es sei angemerkt, dass im Bereich der angesprochenen L-Formen lediglich der erste Flansch sowie der Boden 16 gegeben ist, und der zweite Flansch 20 fehlt.

Bei der Gestaltung gemäß Figur 2, bei der abschnittsweise eine U-Form und abschnittsweise eine L-Form der Fügeseite 10 im Querschnitt gegeben ist, liegt wie in Figur 1 ein definierter stufenloser Übergang zwischen U- und L-Bereich vor. Ferner ist eine Aufdickung 22 vorgesehen. Eine derartige Aufdickung ist ferner bei der Gestaltung gemäß Figur 3 vorgesehen.

Bei der Gestaltung gemäß Figur 3 liegt abschnittsweise auf der Fügeseite 10 eine U-Form, sowie abschnittsweise eine L-Form im Querschnitt vor. Beide Fügeformen U und L sind durch einen definierten stufenlosen Übergang verbunden. Ferner ist eine Aufdickung 22 ähnlich wie in Figur 2 vorgesehen sowie eine Abstufung 24 im Bereich 12. Die Aufdickung 22 beinhaltet volumenmäßig die Abstufung 24.

## Patentansprüche

1. Ersatzteil für eine Gasturbinen-Schaufel, insbesondere für eine Schaufel eines Flugtriebwerks, wobei dieses Ersatzteil (1) dafür bestimmt ist, einen zu ersetzenden, entfernten Bereich der Schaufel zu ersetzen, wobei dieser zu ersetzende Bereich einen Abschnitt der Schaufelspitze aufweist, sowie einen Abschnitt von zumindest einer Kante aus einer Gruppe von Kanten, welche Gruppe von Kanten die Eintrittskante und die Austrittskante der Schaufel umfasst, und wobei das Ersatzteil (1) zumindest eine Seite, die Fügeseite (10), aufweist, mit welcher das Ersatzteil (1) mit der um den entfernten Bereich verminderten Schaufel in Kontakt zu bringen und an diese Schaufel zu schweißen ist, wobei die Fügeseite (10) zumindest einen ersten Abschnitt aufweist, in welchem diese Fügeseite (10) im Querschnitt U-förmig ist, **dadurch gekennzeichnet, dass** die Fügeseite (10) entlang ihrer Längserstreckungsrichtung gerade verläuft.

2. Ersatzteil nach Anspruch 1, **dadurch gekennzeichnet, dass** die Fügeseite (10) zumindest einen zweiten Abschnitt aufweist, in welchem diese Fügeseite (10) im Querschnitt L-förmig ist.

3. Ersatzteil nach Anspruch 2, **dadurch gekennzeichnet, dass** der erste Abschnitt mit dem U-förmigen Querschnitt im Wesentlichen unmittelbar an den zweiten Abschnitt mit dem im L-förmigen Querschnitt angrenzt.

4. Ersatzteil nach einem der vorangehenden Ansprüche, **dadurch gekennzeichnet, dass** die U-Form, die von dem ersten Abschnitt der Fügeseite (10) im Querschnitt ausgebildet wird, einen Grund (16) ausbildet, der beidseits von Flanschen (18, 20) flankiert ist, wobei zumindest einer dieser beiden Flansche (18) in zumindest einem in Längsrichtung der Fügeseite (10) verlaufenden Bereich gegenüber wenigstens einem anderen in dieser Längsrichtung gelegenen Bereich desselben Flansches eine Verdickung (22) seiner Wandstärke aufweist.

5. Ersatzteil nach einem der vorangehenden Ansprüche, **dadurch gekennzeichnet, dass** die U-Form, die von dem ersten Abschnitt der Fügeseite (10) im Querschnitt ausgebildet wird, einen Grund ausbildet, der beidseits von Flanschen (18, 20) flankiert ist, wobei zumindest einer (20) dieser beiden Flansche (18, 20) in zumindest einem in Längsrichtung der Fügeseite (10) verlaufenden Bereich gegenüber wenigstens einem anderen in dieser Längsrichtung gelegenen Bereich desselben Flansches (20) in der quer zu dieser Längsrichtung und quer zu diesem Boden sich erstreckenden Richtung länger ausgebildet ist als in dem anderen Bereich.

6. Gasturbinen-Schaufel, insbesondere für ein Flugtriebwerk, wobei die Schaufel ein Reststück und ein an dieses Schaufelreststück über eine Schweißverbindung angeformtes Ersatzteil (1) aufweist,
**dadurch gekennzeichnet, dass**
dieses Ersatzteil (1) gemäß einem der vorangehenden Ansprüche ausgebildet ist.

7. Gasturbinen-Schaufel nach Anspruch 6, **dadurch gekennzeichnet, dass** der zweite, im Querschnitt L-förmige Abschnitt an eine Kante aus der Gruppe von Kanten angrenzt, welche Gruppe von Kanten die Eintrittskante und die Austrittskante der Schaufel umfasst.

8. Gasturbinen-Schaufel nach einem der Ansprüche 6 und 7, **dadurch gekennzeichnet, dass** der die Verdickung der Wandstärke ausbildende Bereich des Flansches (18, 20) an eine Kante aus der Gruppe von Kanten angrenzt, welche Gruppe von Kanten die Eintrittskante und die Austrittskante der Schaufel umfasst.

9. Verfahren zur Reparatur einer Gasturbinen-Schaufel, insbesondere Schaufel für ein Flugtriebwerk, mit den Schritten
- Abtrennen eines Abschnitts der Schaufel, so dass ein um den zu ersetzenden, abgetrennten Abschnitt verminderter Schaufelbereich verbleibt, wobei der abgetrennte Abschnitt bzw. der zu ersetzende Bereich einen Abschnitt der Schaufelspitze aufweist, sowie einen Abschnitt von zumindest einer Kante aus einer Gruppe von Kanten, welche Gruppe von Kanten die Eintrittskante und die Austrittskante der Schaufel umfasst,
- Bereitstellen eines gemäß einem der Ansprüche 1 bis 6 ausgebildeten Ersatzteils (1),
- Anschweißen des Ersatzteils (1) an das Schaufelreststück zur Bildung einer Schaufel, und zwar insbesondere zur Bildung einer Schaufel gemäß einem der Ansprüche 7 und 8, wobei die Schweißrichtung beim Anschweißen dieses Ersatzteils (1) derart ist, dass aus Richtung der Kante aus der Gruppe von Kanten, welche Gruppe von Kanten die Eintrittskante und die Austrittskante der Schaufel umfasst, in Richtung der Schaufelspitze geschweißt wird.

## Claims

1. A replacement part for a gas-turbine blade, in particular for a blade of an aircraft engine, wherein this replacement part (1) is intended to replace a region of the blade that is to be replaced and has been removed, wherein this region that is to be replaced has a section of the blade tip, and also a section of at least one edge from a group of edges, which group of edges includes the leading edge and the trailing edge of the blade, and wherein the replacement part (1) has at least one side, the joining side (10), with which the replacement part (1) is to be brought into contact with the blade that has been reduced by the removed region and is to be welded to this blade, wherein the joining side (10) has at least one first section in which this joining side (10) is U-shaped in cross-section, **characterised in that** the joining side (10) runs in a straight line along its longitudinal extent.

2. A replacement part according to claim 1, **characterised in that** the joining side (10) has at least one second section in which this joining side (10) is L-shaped in cross-section.

3. A replacement part according to claim 2, **characterised in that** the first section with the U-shaped cross-section substantially directly adjoins the second section with the L-shaped cross-section.

4. A replacement part according to one of the preceding claims, **characterised in that** the U-shape, which is formed by the first section of the joining side (10) in cross-section, forms a base (16) which is flanked on both sides by flanges (18, 20), wherein at least one of these two flanges (18) has a thickening (22) of its wall thickness in at least one region running in the longitudinal direction of the joining side (10) in comparison with at least one other (20) region of the same flange located in this longitudinal direction.

5. A replacement part according to one of the preceding claims, **characterised in that** the U-shape, which is formed by the first section of the joining side (10) in cross-section, forms a base which is flanked on both sides by flanges (18, 20), wherein at least one (20) of these two flanges (18, 20) in at least one region running in the longitudinal direction of the joining side (10) in comparison with at least one other region of the same flange (20) located in this longitudinal direction is formed so as to be longer in the direction extending transversely to this longitudinal direction and transversely to this bottom than in the other region.

6. A gas-turbine blade, in particular for an aircraft engine, wherein the blade has a residual piece and a replacement part (1) pre-formed on this residual blade piece by way of a welded connection,
**characterised in that**
this replacement part (1) is formed in accordance with one of the preceding claims.

7. A gas-turbine blade according to claim 6, **characterised in that** the second section, which is L-shaped in cross-section, adjoins an edge from the group of edges, which group of edges includes the leading edge and the trailing edge of the blade.

8. A gas-turbine blade according to one of claims 6 and 7, **characterised in that** the region of the flange (18, 20) forming the thickening of the wall thickness adjoins an edge from the group of edges, which group of edges includes the leading edge and the trailing edge of the blade.

9. Method for repairing a gas-turbine blade, in particular a blade for an aircraft engine, having the steps
- separation of a section of the blade so that a blade region remains that is reduced by the separated section that is to be replaced, wherein the separated section or the region that is to be replaced has a section of the blade tip, and also a section of at least one edge from a group of edges, which group of edges includes the leading edge and the trailing edge of the blade,
- provision of a replacement part (1) formed in accordance with one of claims 1 to 6,
- welding of the replacement part (1) onto the residual blade piece in order to form a blade, that is, in particular in order to form a blade in accordance with one of claims 7 and 8, wherein the welding direction when welding on this replacement part (1) is such that welding is effected from the direction of the edge from the group of edges, which group of edges includes the leading edge and the trailing edge of the blade, in the direction of the blade tip.

## Revendications

1. Pièce de remplacement pour une aube de turbine à gaz, en particulier pour une aube de groupe motopropulseur, cette pièce de remplacement (1) étant destinée à remplacer une région enlevée à remplacer de l'aube, dans laquelle cette région à remplacer présente une partie de la pointe d'aube, ainsi qu'une partie d'au moins une arête dans un groupe d'arêtes, ce groupe d'arêtes comprenant l'arête d'entrée et l'arête de sortie de l'aube, et dans laquelle la pièce de remplacement (1) présente au moins un côté, le côté de jonction (10), avec lequel la pièce de remplacement (1) doit être mise en contact avec l'aube diminuée de la région enlevée et soudée à cette aube, dans laquelle le côté de jonction (10) présente au moins une première partie, dans laquelle ce côté de jonction (10) a une section transversale en forme de U, **caractérisée en ce que** le côté de jonction (10) est rectiligne le long de sa direction d'extension longitudinale.

2. Pièce de remplacement selon la revendication 1, **caractérisée en ce que** le côté de jonction (10) présente au moins une deuxième partie, dans laquelle ce côté de jonction (10) a une section transversale en forme de L.

3. Pièce de remplacement selon la revendication 2, **caractérisée en ce que** la première partie avec la section transversale en forme de U est essentiellement directement adjacente à la deuxième partie avec la section transversale en forme de L.

4. Pièce de remplacement selon l'une quelconque des revendications précédentes, **caractérisée en ce que** la forme en U, qui est formée par la section transversale de la première partie du côté de jonction (10), crée une base (16), qui est flanquée de part et d'autre par des ailes (18, 20), dans laquelle au moins une de ces deux ailes (18) présente, dans au moins une région s'étendant en direction longitudinale du côté de jonction (10) par rapport à au moins une autre région de la même aile située dans cette direction longitudinale, une surépaisseur (22) de son épaisseur de paroi.

5. Pièce de remplacement selon l'une quelconque des revendications précédentes, **caractérisée en ce que** la forme en U, qui est formée par la section transversale de la première partie du côté de jonction (10), crée une base qui est flanquée de part et d'autre d'ailes (18, 20), dans laquelle au moins une (20) de ces deux ailes (18, 20) est réalisée, dans au moins une région s'étendant en direction longitudinale du côté de jonction (10) par rapport à une autre région de la même aile (20) située dans cette direction longitudinale, avec une longueur plus grande que dans l'autre région dans la direction transversale à la direction longitudinale et dans la direction s'étendant transversalement à cette base.

6. Aube de turbine à gaz, en particulier de groupe motopropulseur, dans laquelle l'aube présente une pièce résiduelle et une pièce de remplacement (1) façonnée sur cette pièce résiduelle d'aube par un assemblage soudé, **caractérisée en ce que** cette pièce de remplacement (1) est réalisée selon l'une quelconque des revendications précédentes.

7. Aube de turbine à gaz selon la revendication 6, **caractérisée en ce que** la deuxième partie, avec la section transversale en forme de L, est adjacente à une arête du groupe d'arêtes, groupe d'arêtes qui comprend l'arête d'entrée et l'arête de sortie de l'aube.

8. Aube de turbine à gaz selon l'une des revendications 6 ou 7, **caractérisée en ce que** la région de l'aile (18, 20) formant une surépaisseur de l'épaisseur de paroi est adjacente à une arête du groupe d'arêtes, groupe d'arêtes qui comprend l'arête d'entrée et l'arête de sortie de l'aube.

9. Procédé de réparation d'une aube de turbine à gaz, en particulier d'une aube de groupe motopropulseur, comportant les étapes suivantes :
- découpage d'une partie de l'aube, de telle manière qu'il subsiste une région d'aube diminuée de la partie découpée à remplacer, la partie découpée ou la région à remplacer présentant une partie de la pointe d'aube, ainsi qu'une partie d'au moins une arête d'un groupe d'arêtes, groupe d'arêtes qui comprend l'arête d'entrée et l'arête de sortie de l'aube ;
- préparation d'une pièce de remplacement (1) selon l'une quelconque des revendications 1 à 6 ;
- soudage de la pièce de remplacement (1) à la pièce résiduelle d'aube pour la formation d'une aube, notamment pour la formation d'une aube selon l'une des revendications 7 et 8, la direction de soudage lors du soudage de cette pièce de remplacement (1) étant telle que, à partir de la direction de l'arête du groupe d'arêtes, groupe d'arêtes qui comprend l'arête d'entrée et l'arête de sortie de l'aube, on soude en direction de la pointe d'aube.
